Europäisches Patentamt

European Patent Office

Office européen des brevets

(11) Numéro de publication: **0 427 899 A1**

## DEMANDE DE BREVET EUROPEEN

(21) Numéro de dépôt: 89403148.3

(22) Date de dépôt: 16.11.89

(51) Int. Cl.⁵: **C04B 18/10**, C04B 18/02, B09B 3/00

(43) Date de publication de la demande:
22.05.91 Bulletin 91/21

(84) Etats contractants désignés:
**AT BE CH DE ES FR GB GR IT LI LU NL SE**

(71) Demandeur: **Société GOMACRIS S.A.**
**Rue des Etangs 18**
**CH-1920 Martigny(CH)**

(72) Inventeur: **Biez, Georges**
**Mas Valencia Route de Clermont l'Hérault**
**F-34600 Bedarieux(FR)**

(74) Mandataire: **Le Roux, Martine et al**
**Cabinet Beau de Loménie 55, rue**
**d'Amsterdam**
**F-75008 Paris(FR)**

(54) **Procédé de valorisation de déchets solides notamment d'ordures ménagères et dispositif pour sa mise en oeuvre.**

(57) La présente invention concerne un procédé de valorisation de déchets solides, comprenant au moins 30 % en poids de matières cellulosiques, et notamment d'ordures ménagères ; ledit procédé incluant les étapes préliminaires de broyage et de triage desdits déchets pour en éliminer les éléments métalliques.

Ledit procédé consiste à traiter thermiquement -dans un réacteur tubulaire (13) équipé d'une vis d'Archimède (24) et chauffé par injection à son entrée de gaz chauds de combustion, ledit réacteur étant maintenu sous une faible dépression- un mélange d'une masse homogène contenant lesdits déchets déchiquetés, et de produits minéraux, ledit mélange contenant notamment de la chaux vive, du carbonate de calcium, et de la soude caustique ; ledit traitement thermique et l'intervention desdits minéraux assurant, dans la première partie du réacteur une montée en température dudit mélange jusqu'à la production d'un intense rayonnement lumineux.

L'invention concerne également un dispositif pour la mise en oeuvre dudit procédé.

fig. 2

# PROCÉDÉ DE VALORISATION DE DÉCHETS SOLIDES, NOTAMMENT D'ORDURES MÉNAGÈRES ET DISPOSITIF POUR SA MISE EN OEUVRE.

La présente invention a pour objet un procédé de valorisation de déchets solides, comprenant au moins 30 % en poids de matières cellulosiques.

Ledit procédé est avantageusement mis en oeuvre pour la valorisation d'ordures ménagères. D'une manière générale, il peut être mis en oeuvre à partir de tout type de déchets, ménagers, industriels, ruraux..., contenant une quantité minimale de cellulose.

L'invention concerne également un dispositif pour la mise en oeuvre dudit procédé.

Ce procédé permet de supprimer les nuisances et pollutions, engendrées par lesdits déchets, en générant un matériau inerte. Ce matériau - type sable, fin ou moyen - peut notamment être utilisé dans la construction, pour le sablage des routes, à titre de remblai... Il est sain et, même avec le temps, on n'observe pas de développement bactérien en son sein.

On connaît, à ce jour, deux principales filières pour le traitement de ces déchets. Ils peuvent être entreposés dans des décharges dites contrôlées, voire sauvagement déposés dans des coins de campagne. Ils peuvent également être incinérés. Aucune de ces filières ne permet une valorisation réelle de ces déchets et toutes deux engendrent de la pollution. La pyrolyse de ces déchets, qui contiennent notamment des matières plastiques chlorées ou fluorées, génère des gaz toxiques, tels que chlore et dioxyne... Leur accumulation, sans traitement, génère également avec le temps des biogaz (notamment méthane) qui, par leur odeur et/ou leur risque d'inflammabilité sont dangereux. Par ailleurs, la minéralisation de ces déchets dans le sol conduit à l'apparition de dangereuses cavernes.

Selon l'invention, on propose un procédé pour se débarrasser desdits déchets sans engendrer de pollution, ledit procédé conduisant à l'élaboration d'un matériau intéressant.

Le procédé de l'invention est mis en oeuvre, comme indiqué ci-dessus avec des déchets solides, comprenant au moins 30 % en poids de matières cellulosiques. Il inclut les étapes préliminaires de broyage desdits déchets et de triage de ceux-ci pour en éliminer les éléments métalliques. Il consiste à traiter thermiquement - dans un réacteur tubulaire équipé d'une vis d'Archimède et chauffé par injection à son entrée de gaz chauds de combustion, ledit réacteur étant maintenu sous une faible dépression - un mélange d'une masse homogène contenant lesdits déchets, déchiquetés et de produits minéraux, ledit mélange contenant notamment de la chaux vive, du carbonate de calcium, et de la soude caustique ; ledit traitement thermique et l'intervention desdits minéraux assurant, dans la première partie du réacteur, une montée en température dudit mélange jusqu'à la production d'un intense rayonnement lumineux.

Selon l'invention, on soumet donc les déchets à un traitement thermique spécifique qui engendre une réaction rayonnante.

Lesdits déchets ont été préalablement broyés et débarrassés des éléments métalliques qu'ils contenaient. Ils interviennent, déchiquetés, sous la forme d'une masse homogène, en mélange avec des produits minéraux. Ils sont déchiquetés, afin de se présenter sous la forme de fines particules, à partir desquelles on élabore facilement une masse homogène.

Lesdits déchets contiennent au moins 30 % en poids de matières cellulosiques. Il s'agit avantageusement, comme indiqué ci-dessus, d'ordures ménagères qui généralement contiennent en poids, environ 60 % de matières cellulosiques, 3 % de matières plastiques, 7 % de produits métalliques, 4 % de verre et 20 % de matériaux divers...

Les déchets sont, selon l'invention, traités thermiquement, en mélange avec des minéraux, et notamment de la chaux vive, du carbonate de calcium et de la soude caustique. Ces minéraux sont destinés à réagir exothermiquement au cours du procédé. Avantageusement, on les choisit pour qu'ils développent au sein de la masse une activité maximale tout en intervenant en quantités raisonnables. On choisit donc avantageusement une chaux très réactive. En ce qui concerne le carbonate de calcium, on utilise avantageusement, pour des raisons économiques notamment, des carbonates de calcium naturels qui, si nécessaire, sont enrichis en calcium, par ajout en leur sein de chlorure de calcium...

Le mélange - masse homogène contenant les déchets déchiquetés et minéraux - est chauffé directement, à l'entrée du réacteur, par injection en son sein de gaz chauds de combustion. De tels gaz chauds peuvent provenir, par exemple, de la combustion de gaz ou de fuel.

Le réacteur utilisé est un réacteur équipé d'une vis d'Archimède ou vis sans fin. Une telle vis permet de véhiculer la masse des réactifs au sein du réacteur et d'assurer un certain brassage de celle-ci.

Le réacteur est maintenu en légère dépression pour l'évacuation des gaz. En fait, on évacue principalement de la vapeur d'eau.

Dans le type de réacteur décrit ci-dessus, on a montré, selon l'invention, qu'il était possible de fossiliser des déchets contenant au moins 30 % de matières cellulosiques, sans générer de matières polluantes. Cette fossilisation accélérée à vraisemblablement lieu au moment où apparaît dans le réacteur l'émission lumineuse intense. Elle résulte de l'action de la chaleur - en fait, d'un choc thermique, puisque des gaz chauds sont injectés directement à l'entrée du réacteur - sur un mélange contenant certains réactifs.

Le procédé de l'invention ne conduit au résultat escompté - suppression des matières polluantes et obtention d'un produit inerte (sous forme de morceaux cassants) - que si ladite émission lumineuse ou "aura" est observée dans le réacteur.

La composition du mélange à introduire dans ledit réacteur et la température à laquelle il convient de porter ledit mélange à son entrée dans ledit réacteur sont des paramètres à fixer en vue de l'obtention de ladite "aura".

Leur détermination et optimisation sont des opérations à la portée de l'homme de l'art.

La masse homogène contenant les déchets déchiquetés est avantageusement obtenue par mélange, en amont du réacteur, desdits déchets avec du carbonate de calcium et de préférence des carbonates de calcium naturels, dans lesquels éventuellement on a incorporé du chlorure de calcium. Le mélange ne se fait bien que si les déchets présentent un certain taux d'humidité, ce qui est généralement le cas. Ce taux d'humidité ne doit toutefois pas compromettre la réaction ultérieure. Il est avantageusement compris entre 20 et 40 %. Pour présenter un tel taux d'humidité, les déchets sont éventuellement - si nécessaire - préalablement séchés (partiellement) ou au contraire humidifiés. Auxdits déchets présentant un tel taux d'humidité, on incorpore généralement de 30 à 40 % en poids de carbonates de calcium naturels. Comme indiqué ci-dessus, cette masse de carbonates de calcium peut avoir été préalablement enrichie en calcium, par addition en son sein de chlorure de calcium.

A ladite masse homogène - déchets déchiquetés + carbonates de calcium - on ajoute, selon l'invention, pour l'obtention sous l'effet de la chaleur du résultat recherché, d'autres minéraux et notamment, comme précisé ci-dessus, de la chaux vive et de la soude caustique.

On ajoute également de manière avantageuse des silicates carbonatés (type $Na_2Ca_2Mg_4H_4SiO_2(CO_3)_3$).

L'intervention de ces minéraux - chaux vive , carbonate de calcium (notamment des carbonates de calcium naturels éventuellement enrichis en chlorure de calcium), soude caustique, et avantageusement silicates carbonatés - permet l'obtention du résultat recherché : apparition d'une "aura" par chauffage direct du mélange et obtention d'une masse inerte, sous forme de morceaux cassants, friables.

Lesdits minéraux, autres que le carbonate de calcium (contenant éventuellement du chlorure de calcium) interviennent aux fins de l'invention (pour la génération de l'"aura") à raison d'environ 5 à 35 %, en poids de ladite masse homogène. Leur quantité minimale d'intervention dépend évidemment de la constitution de ladite masse homogène et notamment de la teneur en matières cellulosiques des déchets à traiter. Ils interviennent avantageusement en quantités quasi-équivalentes (1/3, 1/3, 1/3) :

- chaux vive entre 10 et 45 %
- soude caustique entre 5 et 35 %
- silicates carbonatés entre 10 et 45 %, en poids du mélange ternaire (chaux vive + soude caustique + silicates carbonatés).

La masse réactive ainsi constituée - masse homogène + minéraux - subit le choc thermique à l'entrée du réacteur, par injection en son sein de gaz chauds.

On a observé, selon l'invention, l'"aura" nécessaire à la fossilisation lorsque ladite masse réactive était à une température de 250 à 300°C. Cette température, au sein de la masse, peut être obtenue selon l'invention par injection de gaz brûlés à 500-600°C.

On a indiqué précédemment qu'à la sortie du réacteur la masse se présentait sous la forme de morceaux cassants, friables. Avantageusement ces morceaux, récupérés, sont désintégrés. On obtient alors un sable d'une densité de l'ordre de 0,3 à 0,5. Un tel sable n'est pas facilement utilisable et avantageusement on fait intervenir dans le procédé de l'invention des charges pour en augmenter la densité. Ces charges peuvent intervenir à au moins deux stades du procédé de l'invention. Elles peuvent être incorporées au sable résultant du passage de solides sortant du réacteur dans un désintégrateur et/ou incorporées au cours de l'élaboration de la masse homogène - déchets déchiquetés + carbonate de calcium - avant son entrée dans le réacteur.

En aval du réacteur, tout type de charge peut intervenir. En amont de celui-ci, on ne peut utiliser que des charges neutres. On entend par charges neutres, dans le présent contexte, des charges compatibles avec la réaction thermique (échauffement + "aura"). De telles charges neutres peuvent être choisies parmi le carbonate de calcium, le carbonate de chaux, la baryte en poudre, les silicates carbonatés, l'argile en poudre, le gypse saccharoïde en poudre, la bauxite en poudre..., ou leurs mélanges. On notera donc que le carbonate de calcium et les silicates carbonatés peuvent intervenir dans le procédé de l'invention en quantité plus importante que celles déjà mentionnées ci-dessus.

On précisera, à titre illustratif, que le mélange carbonate de calcium, carbonate de chaux peut ainsi représenter jusqu'à 50 % en poids de ladite masse homogène (du carbonate de calcium intervient donc à la fois à titre de réactifs et de charge neutre).

La baryte (avec son sédiment) peut intervenir à raison de 0 à 30 % en poids ; l'argile à raison de 0 à 15 %, le gypse à raison de 0 à 20 %, la bauxite à raison de 0 à 20 %. Les silicates carbonatés peuvent intervenir globalement jusqu'à hauteur de 30 % en poids de la masse totale à l'entrée du réacteur.

Lesdites charges permettent d'obtenir un sable de densité déterminée.

Si l'on souhaite ajuster sa granulométrie - plus précisément l'augmenter - on ajoutera au procédé de l'invention une étape supplémentaire.

La masse sortant du réacteur, après désintégration et éventuellement incorporation de charges neutres en son sein, se présente sous la forme d'une poudre très fine, voire impalpable.

Une telle poudre est avantageusement conditionnée avec des liants d'agglomération pour augmenter sa granulométrie, pour l'obtention, notamment, d'un sable moyen, utilisable en construction.

Le liant est avantageusement mélangé à la poudre dans un agglomérateur vertical type Flexomix ; le mélange est ensuite séché, ce qui provoque la cristallisation dudit liant.

Ledit liant doit être choisi pour respecter le caractère inerte, stable du produit obtenu par le procédé de l'invention. Il ne doit pas introduire de bactéries. On peut notamment utiliser du silicate de soude, qui réagira avec le calcium présent dans les grains du produit.

On peut également utiliser un liant à base de chaux vive, laitiers de ciment, laitiers de hauts fourneaux et carboxyméthylcellulose (ou équivalent). Un autre liant utilisable est un liant à base de brai soluble dans l'eau.

Cette étape de traitement d'un matériau pulvérulent, pour augmenter sa granulométrie, est parfaitement connue de l'homme de l'art.

Ainsi valorise-t-on, selon l'invention, des déchets sans générer de pollution, dans la mesure où il n'est pas apparu nécessaire de porter dans le réacteur la masse réactive à une température supérieure à 300°C (pyrolyse des matières plastiques). Les gaz de combustion, introduits à l'entrée du réacteur pour chauffer directement ladite masse réactive, semblent soit être piégés dans ladite masse, soit se décomposer, notamment au moment de ladite "aura".

L'invention a également pour objet un dispositif pour la mise en oeuvre du procédé, explicité ci-dessus.

Ledit dispositif comprend essentiellement :

- un réacteur tubulaire équipé d'une vis d'Archimède,
- une chambre de combustion débouchant à l'entrée dudit réacteur, pour l'apport direct de calories,
- des moyens pour l'alimentation dudit réacteur,
- des moyens pour le maintien d'une légère dépression dans ledit réacteur.

Le réacteur est alimenté, à l'une de ses extrémités, par la masse réactive - masse homogène contenant les déchets déchiquetés et éventuellement des charges neutres + divers minéraux -ce, grâce à au moins un sas. Il peut y avoir un sas pour ladite masse homogène et un autre pour un mélange de minéraux. Ce (ou ces) sas sera (serront) hermétique(s), alimenté(s) par une écluse à vis basse pression, pour qu'en aucun cas la dépression à l'intérieur du réacteur - nécessaire à l'évacuation des gaz - ne soit compromise par un appel d'air extérieur.

Le déplacement de ladite masse à l'intérieur du réacteur s'effectue grâce à la vis d'Archimède (ou vis sans fin). Il assure également une homogénéisation permanente de ladite masse.

En amont du réacteur, on trouve la chambre de combustion. Il peut s'agir d'un brûleur à fuel ou d'un brûleur à gaz.

Les gaz chauds qui y sont générés sont acheminés à l'entrée du réacteur. On a indiqué précédemment que le résultat attendu était notamment obtenu avec une température à l'entrée du réacteur de l'ordre de 500 à 600°C.

Les réactifs sont eux introduits à température ambiante et subissent un choc thermique.

Avantageusement, la masse homogène contenant les déchets déchiquetés, du carbonate de calcium et éventuellement d'autres minéraux, est élaboré en amont du réacteur dans un mélangeur à ruban.

A la sortie dudit réacteur, la masse a déjà subi un certain refroidissement. La sortie de ladite masse s'effectue avantageusement dans un sas de décompression, qui permet la séparation des gaz d'une part, des solides d'autre part.

Lesdits solides sont évacués par gravité. Avantageusement, on récupère les fines en faisant passer les vapeurs dans au moins un cyclone. Lesdites vapeurs -principalement constituées de vapeur d'eau- s'évacuent par exemple, par une cheminée naturelle.

Les solides, comme indiqué ci-dessus, se présentent sous la forme de morceaux friables. Ces morceaux peuvent être pulvérisés dans un désintégrateur, associé au dispositif de l'invention (en aval du réacteur).

La poudre obtenue peut ensuite être traitée dans un ensemble mélangeur/cristalliseur pour le réglage de sa granulométrie. Dans ledit mélangeur, elle est mélangée à au moins un liant d'agglomération. Le dispositif de l'invention peut donc avantageusement associer à ses éléments essentiels - réacteur et ses moyens de chauffe, d'alimentation, de maintien en dépression- en amont dudit réacteur un mélangeur à ruban et successivement en aval dudit réacteur un désintégrateur et un ensemble mélangeur/sécheur-cristalliseur.

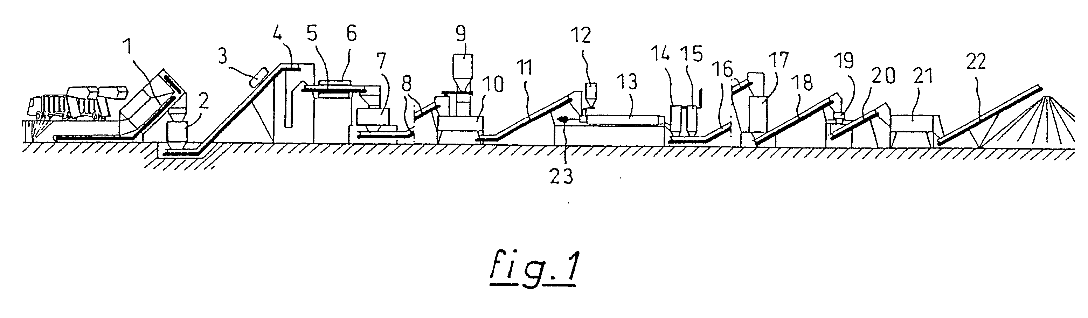

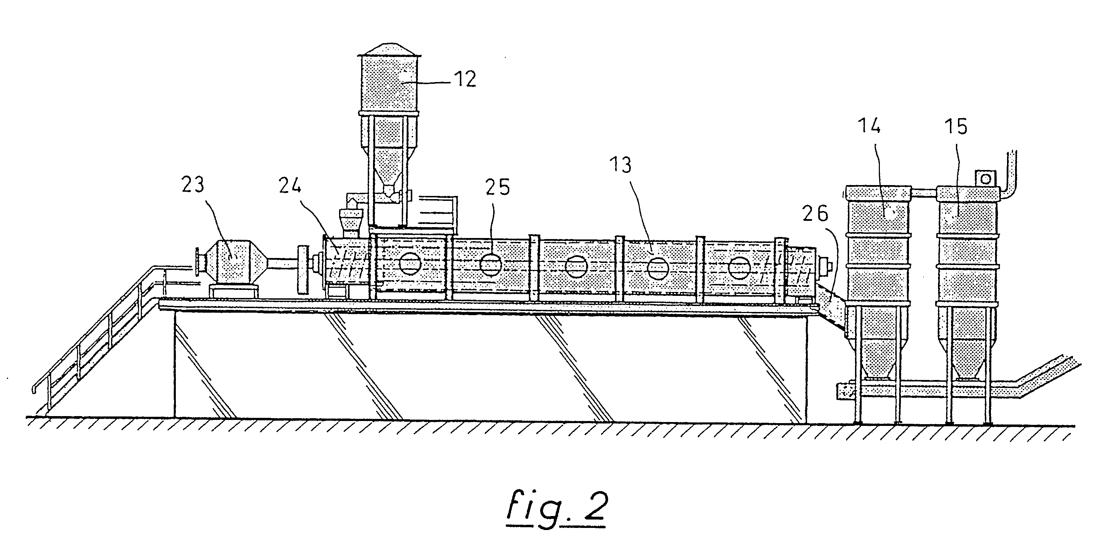

Les figures 1 et 2 annexées illustrent la mise en oeuvre du procédé de l'invention.

Plus précisément, on a schématisé sur la figure 1 une installation de traitement de déchets, où ledit procédé est mis en oeuvre et sur la figure 2, les éléments essentiels (du dispositif de l'invention) de mise en oeuvre dudit procédé.

Sur ces figures, on a représenté :
- en 1, une trémie à fond mobile avec porte mobile,
- en 2, un broyeur à vis,
- en 3, un déferrailleur overband,
- en 4, un transporteur élévateur avec tambour magnétique,
- en 5, un transporteur d'alimentation déchiqueteur,
- en 6, une cage magnétique,

A ce stade du dispositif, les déchets sont broyés et débarrassés des éléments métalliques qu'ils contenaient.
- en 7, un déchiqueteur à vis,
- en 8, un transporteur d'alimentation mélangeur,
- en 9, un silo à poudre avec vis à écluse, renfermant notamment des carbonates de calcium naturels,
- en 10, un mélangeur à ruban,
- en 11, le transporteur d'alimentation du réacteur,
- en 12, un silo à poudre avec vis à écluse,
- en 13, le réacteur de fossilisation accélérée,

Les moyens (11) et (12) constituent les moyens d'alimentation dudit réacteur.
- en 14 et 15, deux cyclones (pour la récupération des fines),
- en 16, le transporteur d'alimentation du désintégrateur,
- en 17, ledit désintégrateur (vertical),
- en 18, le transporteur d'alimentation de l'agglomérateur,
- en 19, ledit agglomérateur vertical Flexomix,
- en 20, le transporteur d'alimentation de l'auge de séchage,
- en 21, ladite auge de séchage,
- en 22, le transporteur de mise en stock,
- en 23, la chambre de combustion,
- en 24, la vis d'Archimède à l'intérieur du réacteur,
- en 25, des hublots de visualisation de l'intérieur dudit réacteur,
- en 26, la goulotte de décharge dudit réacteur.

Dans une telle installation, on a traité 11 869,2 tonnes de déchets à l'heure.

Le temps de passage de la masse à l'intérieur du réacteur était d'environ 30 min.

L'émission lumineuse ou "aura" a été observée aux environs du premier tiers du réacteur alors que la température à l'intérieur de la masse véhiculée dans ledit réacteur est de 250°C , la température à l'entrée du réacteur étant comprise entre 500 et 600°C.

**Revendications**

1. Procédé de valorisation de déchets solides, comprenant au moins 30 % en poids de matières cellulosiques, et notamment d'ordures ménagères ; ledit procédé incluant les étapes préliminaires de broyage et de triage desdits déchets pour en éliminer les éléments métalliques, caractérisé en ce qu'il consiste à traiter thermiquement -dans un réacteur tubulaire (13) équipé d'une vis d'Archimède (24) et chauffé par injection à son entrée de gaz chauds de combustion, ledit réacteur étant maintenu sous une faible dépression- un mélange d'une masse homogène contenant lesdits déchets, déchiquetés et de produits minéraux, ledit mélange contenant notamment de la chaux vive, du carbonate de calcium, et de la soude caustique ; ledit traitement thermique et l'intervention desdits minéraux assurant, dans la première partie du réacteur une montée en température dudit mélange jusqu'à la production d'un intense rayonnement lumineux.

2. Procédé selon la revendication 1, caractérisé en ce que ladite masse homogène inclut lesdits déchets déchiquetés, présentant un taux d'humidité entre 20 et 40 % et, pour 30 à 40 % de sa masse, des carbonates de calcium naturels.

3. Procédé selon l'une des revendications 1 ou 2, caractérisé en ce que ledit mélange comprend en outre des silicates carbonatés.

4. Procédé selon l'une quelconque des revendications 1 à 3, caractérisé en ce que les produits minéraux intervenant -autres que le carbonate de calcium préalablement intimement mélangé aux déchets déchiquetés- représentent de 5 à 35 % en poids de ladite masse homogène.

5. Procédé selon l'une quelconque des revendications 1 à 4, caractérisé en ce que le mélange introduit dans le réacteur contient également des charges neutres -choisies parmi le carbonate de calcium, le carbonate de chaux, la baryte en poudre, les silicates carbonatés, l'argile en poudre, le gypse saccharoïde en poudre, la bauxite en poudre ou leurs mélanges- pour le réglage de la densité des produits sortant dudit réacteur.

6. Procédé selon l'une quelconque des revendications 1 à 5, caractérisé en ce que la masse sortant dudit réacteur est, après désintégration et éventuellement ajout en son sein de charges neutres, traitée avec au moins un liant d'agglomération pour l'obtention d'un produit -type sable- de granulométrie donnée.

7. Dispositif pour la mise en oeuvre du procédé selon l'une quelconque des revendications précédentes, caractérisé en ce qu'il comprend :
- un réacteur tubulaire (13) équipé d'une vis d'Archimède (24) ;
- une chambre de combustion (23) débouchant à l'entrée dudit réacteur, pour l'apport direct de calories ;
- des moyens (11, 12) pour l'alimentation dudit réacteur;
- des moyens pour le maintien d'une légère dépression dans ledit réacteur.

8. Dispositif selon la revendication 7, caractérisé en ce qu'il comporte, en amont dudit réacteur, un mélangeur à ruban (10) pour l'élaboration de ladite masse homogène à partir des déchets déchiquetés.

9. Dispositif selon l'une des revendications 7 ou 8, caractérisé en ce qu'il comporte en aval dudit réacteur, un désintégrateur (17) qui transforme la masse sortant dudit réacteur en une poudre très fine.

10. Dispositif selon la revendication 9, caractérisé en ce qu'il comporte en aval dudit désintégrateur (17) un mélangeur (19) pour l'agglomération de ladite poudre en particules et des moyens (21) de séchage/cristallisation desdites particules obtenues.

_fig.1_

7

_fig. 2_

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 472 421  (H. GERONIMO) <br> * Revendications 1,2,5,8,9,11; page 2, lignes 8-13; page 5, lignes 24-31 * <br> --- | 1,5-7,9 ,10 | C 04 B  18/10 <br> C 04 B  18/02 <br> B 09 B   3/00 |
| A | WO-A-8 607 589  (LOMA FINANCE) <br> * Revendications 1,2,7,8,14,15,17 * <br> --- | 1,2,5,7 | |
| A | DE-A-2 701 385  (TRASSWERKE MEURIN) <br> --- | | |
| A | EP-A-0 148 723  (MANNESMANN) <br> ----- | | |

**DOMAINES TECHNIQUES RECHERCHES (Int. Cl.5)**

C 04 B  18
C 04 B   7
C 04 B   2
B 09 B   3

Le présent rapport a été établi pour toutes les revendications

| Lieu de la recherche | Date d'achèvement de la recherche | Examinateur |
|---|---|---|
| LA HAYE | 06-07-1990 | DAELEMAN P.C.A. |